# EUROPEAN PATENT SPECIFICATION

(11) **EP 2 789 654 B1**
(45) Date of publication and mention of the grant of the patent: **09.03.2016**
(21) Application number: 12855149.6
(22) Date of filing: 06.12.2012
(51) Int. Cl.: C08K 7/22, C08J 9/00, C09J 7/02, C09J 4/00

(54) **COMPOSITION FOR FOAM TAPE BASE MATERIAL, FOAM TAPE USING SAME, AND METHOD FOR MANUFACTURING COMPOSITION FOR FOAM TAPE BASE MATERIAL**
ZUSAMMENSETZUNG FÜR EIN SCHAUMSTOFFBANDBASISMATERIAL, SCHAUMSTOFFBAND DAMIT UND VERFAHREN ZUR HERSTELLUNG EINER ZUSAMMENSETZUNG FÜR EIN SCHAUMSTOFFBANDBASISMATERIAL
COMPOSITION DE MATÉRIAU DE BASE POUR BANDE DE MOUSSE, BANDE DE MOUSSE L'UTILISANT, ET PROCÉDÉ DE PRÉPARATION DE LADITE COMPOSITION DE MATÉRIAU DE BASE POUR BANDE DE MOUSSE

(30) Priority: 07.12.2011 KR 20110130523
(43) Date of publication of application: 15.10.2014
(73) Proprietor: LG Hausys, Ltd., Seoul 150-721 (KR)
(72) Inventor: YOO, Seung-Min, Gunpo-si Gyeonggi-do 435-050 (KR); KIM, Jang-Soon, Seongnam-si Gyeonggi-do 463-420 (KR); KIM, Ji-Hye, Bucheon-si Gyeonggi-do 420-765 (KR)
(74) Representative: Zacco Sweden AB
(86) International application number: PCT/KR2012/010519
(87) International publication number: WO 2013/085295

(56) References cited:
- EP-A1- 1 156 077
- EP-A1- 2 287 263
- WO-A1-01/88026
- KR-A- 20080 013 113
- KR-A- 20080 013 113
- US-A1- 2004 192 836

## Description

### [Technical Field]

The present invention relates to a foam tape base material composition and a foam tape using the same, and more particularly, to a foam tape base material composition using a siloxane surfactant, a foam tape using the base material composition, and a method for preparing the same.

### [Background Art]

In the related art, Korean Patent Laid-open Publication No. 10-2000-18221 discloses an acrylic foam tape used for exterior decoration, such as interior design, garnish for automobiles, and the like, and a method for preparing the acrylic foam tape. A fluorine surfactant used in preparation of an existing bubble dispersive type foam tape has a limit in use due to extremely high price and environmental regulations. In addition, since commercially available fluorine surfactants do not sufficiently stabilize bubbles in an acrylic adhesive, it is difficult to prepare the acrylic foam tape having a desired low density.

EP 2287263 discloses foam adhesive tapes having good peel strength obtained from a composition comprising an acrylic monomer, a radical initiator, a crosslinker,a porous filler and a surfactant.

Further, although an existing silicone surfactant includes high molecular weight polysiloxane and thus helps the foam tape to have bubble stability, there is a problem in that the silicone surfactant deteriorates adhesion of the finally prepared foam tape. This happens because a large number of siloxane groups included in the silicone surfactant can provide influence on the foam tape, such as deterioration in adhesion of a surface thereof, and other low molecular weight mixing components included in the silicone surfactant also have influence on adhesion of the foam tape.

Therefore, there is a need for a foam tape having competitive price and quality by introducing a silicone surfactant which exhibits high bubble stability and does not deteriorate adhesion of the foam tape.

### [Disclosure]

### [Technical Problem]

The present invention is conceived to solve the above problems, and it is an aspect of the present invention to provide a foam tape exhibiting excellent bubble stability and adhesion.

### [Technical Solution]

In accordance with one aspect of the present invention, a foam tape base material composition includes an acrylic monomer, a radical initiator, a cross-linking agent, a porous filler, and a surfactant, wherein the surfactant includes 60% by weight (wt%) to 90 wt% of a siloxane polymer, and 10 wt% to 40 wt% of a non-siloxane polymer.

### [Advantageous Effects]

According to the invention, since the foam tape base material composition includes the surfactant including a high amount of the siloxane polymer and a low amount of the non-siloxane polymer, the foam tape base material composition exhibits excellent bubble stability and does not deteriorate adhesion of the foam tape.

### [Description of Drawings]

Fig. 1 is a sectional view of a foam tape according to one embodiment of the present invention.
Fig. 2 includes pictures showing evaluation results of bubble stability of foam tapes according to Examples and Comparative Examples.

### [Best Mode]

The above and other aspects, features, and advantages of the present invention will become apparent from the detailed description of the following embodiments in conjunction with the accompanying drawings. It should be understood that the present invention is not limited to the following embodiments and may be embodied in different ways and that the embodiments are provided for complete disclosure and thorough understanding of the present invention by those skilled in the art. The scope of the present invention is defined only by the claims. Like components will be denoted by like reference numerals throughout the specification.

Hereinafter, a foam tape base material composition, a foam tape using the base material composition and a method for preparing the foam tape according to embodiments of the present invention will be described in detail with reference to the accompanying drawings.

According to one embodiment of the invention, a foam tape base material composition includes an acrylic monomer, a radical initiator, a cross-linking agent, a porous filler, and a surfactant, wherein the surfactant includes 60 wt% to 90 wt% of a siloxane polymer, and 10 wt% to 40 wt% of a non-siloxane polymer.

According to the invention, the surfactant includes a higher amount of the siloxane polymer and a lower amount of the non-siloxane polymer than existing surfactants. If a foam tape is prepared using the existing surfactant including a high amount of the non-siloxane polymer, the foam tape can be deteriorated in adhesion, since the non-siloxane polymer moves to a surface of the tape. The foam tape base material composition according to the invention minimizes an existing problem due to deterioration in adhesion by reducing the amount of the non-siloxane polymer, and exhibits excellent bubble stability by increasing the amount of the siloxane compound.

According to the invention, the surfactant includes 60 wt% to 90 wt% of the siloxane polymer, and 10 wt% to 40 wt% of the non-siloxane polymer, as described above. If the siloxane polymer is present in an amount of less than 60 wt%, it is difficult to secure sufficient bubble stability of the foam tape, and if the siloxane polymer is present in an amount of greater than 90 wt%, the foam tape can suffer from deterioration in adhesion. In addition, if the non-siloxane polymer is present in an amount of less than 10 wt%, there is a problem in that the foam tape does not obtain a sufficiently stable foam shape, and if the non-siloxane polymer is present in an amount of greater than 40 wt%, the foam tape can suffer from deterioration in adhesion.

The siloxane polymer refers to a siloxane group-containing polymer, and may be polyalkyleneoxide-modified polydimethylsiloxane. The polyalkyleneoxide-modified polydimethylsiloxane may have a block copolymer form. The polyalkyleneoxide-modified polydimethylsiloxane may have a structure in which linear polydimethylsiloxane includes branched polyalkyleneoxide, or a structure in which polyalkyleneoxide is placed at an end of a silicone backbone.

In addition, the non-siloxane polymer may be polyalkyleneoxide.

According to the invention, the acrylic monomer serves to improve adhesion and cohesion of the foam tape, and may include at least one selected from the group consisting of butyl acrylate, butyl methacrylate, hexyl acrylate, hexyl methacrylate, n-octyl acrylate, n-octyl methacrylate, isooctyl acrylate, isooctyl methacrylate, 2-ethylhexyl acrylate, 2-ethylhexyl methacrylate, isononyl acrylate, isononyl methacrylate, acrylic acid, methacrylic acid, maleic acid, fumaric acid, acrylamide, N-vinyl pyrrolidone, N-vinyl caprolactam, and acrylonitrile.

The acrylic monomer may include a mixture of a soft acrylate monomer, such as butyl acrylate, butyl methacrylate, hexyl acrylate, hexyl methacrylate, n-octyl acrylate, n-octyl methacrylate, isooctyl acrylate, isooctyl methacrylate, 2-ethylhexyl acrylate, 2-ethylhexyl methacrylate, isononyl acrylate and isononyl methacrylate, and a hard acrylate monomer, such as acrylic acid, methacrylic acid, maleic acid, fumaric acid, acrylamide, N-vinyl pyrrolidone, N-vinyl caprolactam and acrylonitrile. The acrylic monomer may include 80 parts by weight to 99 parts by weight of the soft acrylate monomer, and 1 part by weight to 20 parts by weight of the hard acrylate monomer.

According to the invention, the radical initiator is used in polymerization of the acrylic monomer, and may be selected from among commercially available initiators. More particularly, the radical initiator may be a mixture of a thermal initiator and a photoinitiator. Since polymerization by the photoinitiator can provide low polymerization efficiency, molecular weight and viscosity of a polymer are preferably adjusted to within a desired range by mixing the thermal initiator with the photoinitiator. The photoinitiator may include benzoin methyl ether, benzoin isopropyl ether, anisoin methyl ether, benzoin, benzyl ketal, and the like. In addition, the thermal initiator may include peroxide thermal initiators including benzoyl peroxide, azobisisobutyronitrile, and amine thermal initiators. The thermal initiator and the photoinitiator may be any one which is used by those skilled in the art and is commercially available without limitation.

According to the invention, the cross-linking agent serves to reinforce initial adhesion of the foam tape through cross-linking between acrylic polymers in the process of polymerization of the acrylic monomer and in the process of exhibition of adhesion of an adhesive. The cross-linking agent may include photo cross-linking agents, thermal cross-linking agents, and mixtures thereof. For example, the cross-linking agent may include diacrylate cross-linking agents, such as hexanediol diacrylate, ethylene glycol diacrylate, diethylene glycol diacrylate, triethylene glycol diacrylate, propylene glycol diacrylate, dipropylene glycol diacrylate, tripropylene diacrylate and the like, triacrylate, aziridine, epoxy cross-linking agents, and the like. The cross-linking agent may also be any one which is used by those skilled in the art and is commercially available without limitation.

The porous filler may include thermally expandable resins, such as polymeric sphere Expancel 551DU™ and the like, glass macroballoon™, glass bubbles, and the like. The porous filler serves to form a large number of pores in the foam tape through expansion thereof by heat upon polymerization of the acrylic monomer. The glass macroballoon is generally used in the art, and may have a hollow spherical shape in order to efficiently absorb noise.

In addition, the foam tape base material composition may further include an additive selected from the group consisting of tackifiers, coupling agents, antistatic agents, dyes, pigments, UV blocking agents, antioxidants, processing oil, and mixtures thereof.

The tackifier serves to improve initial adhesion of the foam tape. The tackifier may include at least one selected from among rosin ester, rosin, terpene, and petroleum resin tackifiers.

After the foam tape according to the invention is used in attachment between adherends, and the like, since the coupling agent promotes cross-linking of the acrylic polymer included in the base material composition upon exposure to heat, sunlight, temperature or the like under ambient conditions, and thus allows a three-dimensional network to be formed, the coupling agent serves to allow the foam tape to exhibit permanent adhesion. The coupling agent may be a mixture of amine silane and epoxy silane.

The antistatic agent serves to prevent an adherend to which the foam tape is applied from suffering from static electricity. The antistatic agent may be an antistatic agent known in the art.

Further, the foam tape base material composition may include the processing fluid to improve cold resistance. The processing fluid may include diisobutyl phthalate (DIBP), dioctyl phthalate (DOP), allyl ethers, paraffin oil, naphthalene oil, and the like, without being limited thereto.

According to the invention, the base material composition may further include dyes, pigments, UV blocking agents, antioxidants, and the like so long as the base material composition maintains properties thereof. In addition, an amount thereof may vary with desired properties of a final product.

According to the invention, the foam tape base material composition may include 0.1 parts by weight to 5 parts by weight of the radical initiator, 0.01 parts by weight to 5 parts by weight of the cross-linking agent, 1 parts by weight to 10 parts by weight of the porous filler, and 0.1 parts by weight to 5 parts by weight of the surfactant, based on 100 parts by weight of the acrylic monomer.

In the foam tape base material composition, if the radical initiator is present in an amount of less than 0.1 parts by weight, there can be a problem of an unreacted monomer, and if the radical initiator is present in an amount of greater than 5 parts by weight, there can be a problem of reduction in molecular weight of the polymer.

In the foam tape base material composition, if the cross-linking agent is present in an amount of less than 0.01 parts by weight, the foam tape can suffer from deterioration in cohesion or weather resistance. Conversely, if the cross-linking agent is present in an amount of greater than 5 parts by weight, the foam tape can suffer from deterioration in initial adhesion and adhesive properties.

In the foam tape base material composition, if the porous filler is present in an amount of less than 1 part by weight, the foam tape can suffer from deterioration in prevention of noise. Conversely, if the porous filler is present in an amount of greater than 10 parts by weight, the foam tape can suffer from deterioration in adhesion due to excess filler.

In the foam tape base material composition, if the surfactant is present in an amount of less than 0.1 parts by weight, there can be a problem of residual bubbles in the foam tape. Conversely, if the surfactant is present in an amount of greater than 5 parts by weight, the foam tape can suffer from deterioration in cohesion and durability.

According to one embodiment of the invention, a method for preparing a foam tape includes: (a) mixing an acrylic monomer, a radical initiator, a cross-linking agent, a porous filler, and a surfactant including 60 wt% to 90 wt% of a siloxane polymer and 10 wt% to 40 wt% of a non-siloxane polymer to prepare a base material composition; (b) coating the base material composition onto a backing film; and (c) forming a foam tape by performing polymerization simultaneously with foam formation by curing the backing film coated with the base material composition through a UV curing apparatus.

In operation (a), the base material composition of the foam tape is prepared by mixing the acrylic monomer, the radical initiator, a cross-linking agent, the porous filler, and the surfactant including 60 wt% to 90 wt% of the siloxane polymer and 10 wt% to 40 wt% of the non-siloxane polymer.

In operation (b), the base material composition obtained in operation (a) is coated onto the backing film. The backing film serves to support the base material composition while the base material composition is polymerized to form an adhesive material. The backing film may be a general PET release film. In addition, coating may be performed using a general coater.

In operation (c), foam formation and polymerization are simultaneously performed by simultaneously performing UV irradiation (10 W to 60 W) and heating (100°C to 180°C) by curing the backing film coated with the base material composition using the UV curing apparatus. UV irradiation may be performed at a power of 10 W to 60 W, and heating may be performed at a temperature of 100°C to 180°C. In operation (c), polymerization may be performed under typical polymerization conditions, particularly, under conditions for polymerization of the acrylic monomer into an acrylic polymer. Although the present invention is not limited as to the polymerization conditions, for efficiency of the initiator, it is desirable that an oven at a temperature of 60°C to 120°C be used in polymerization by a thermal initiator, and that polymerization be performed for 2 minutes to 3 minutes.

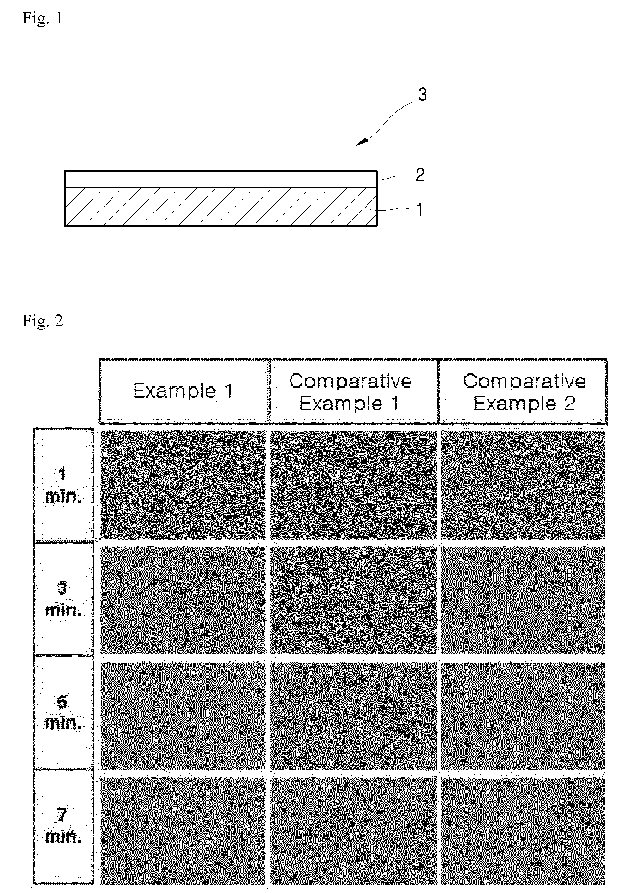

Through the above processes, the foam tape according to the invention can be prepared. As shown in Fig. 1, a foam tape 3 prepared through the above processes has a structure which includes a foam layer 1 formed of the base material composition, and a backing film 2 supporting the foam layer.

Hereinafter, the present invention will be explained in more detail with reference to some examples. It should be understood that these examples are not to be in any way construed as limiting the present invention.

### [Example 1]

90 parts by weight of 2-ethylhexyl acrylate and 10 parts by weight of a polar acrylic acid monomer were subjected to thermal polymerization in a 1 L glass reactor, thereby preparing a syrup having a viscosity of 3500 cPs. Next, 0.5 parts by weight of Irgacure-651 (α,α-methoxy-α-hydroxyacetophenone) as a photoinitiator, and 0.35 parts by weight of 1,6-hexanediol diacrylate (HDDA) as a cross-linking agent were mixed with the syrup based on 100 parts by weight of the syrup, followed by sufficient stirring. Next, 4.5 parts by weight of glass bubbles and 1.5 parts by weight of silica were mixed with the mixed syrup, followed by sufficient stirring until the components were uniformly mixed. The mixture was subjected to vacuum degassing using a vacuum pump. Next, the mixture and 2 parts by weight of a silicone surfactant including 80 wt% of a siloxane polyalkyleneoxide copolymer and 20 wt% of a non-siloxane polymer were coated to a thickness of 1 mm onto a release film using a frother while nitrogen gas was injected, followed by curing using a UV curing apparatus, thereby preparing an acrylic foam tape.

### [Example 2]

An acrylic foam tape according to Example 2 was prepared in the same manner as in Example 1 except that a silicone surfactant including 65 wt% of a dimethyl methyl propyl siloxane copolymer and 35 wt% of a non-siloxane polymer was used.

### [Example 3]

An acrylic foam tape according to Example 3 was prepared in the same manner as in Example 1 except that a silicone surfactant including 75 wt% of a dimethyl methyl propyl siloxane copolymer and 25 wt% of a non-siloxane polymer was used.

### [Example 4]

An acrylic foam tape according to Example 4 was prepared in the same manner as in Example 1 except that a silicone surfactant including 85 wt% of a dimethyl methyl propyl siloxane copolymer and 15 wt% of a non-siloxane polymer was used.

### [Comparative Example 1]

An acrylic foam tape according to Comparative Example 1 was prepared in the same manner as in Example 1 except that a silicone surfactant (SH 192, Dow Corning Toray Co., Ltd.) including 50 wt% of a dimethyl methyl propyl siloxane copolymer and 50 wt% of a non-siloxane polymer was used.

### [Comparative Example 2]

An acrylic foam tape according to Comparative Example 2 was prepared in the same manner as in Example 1 except that a fluorine surfactant FC-4430 (3M Co., Ltd.) was used instead of the silicone surfactant.

### [Property Evaluation]

### 1) Bubble stability

Bubble stability was evaluated only on the acrylic foam tapes according to Example 1 and Comparative Example 1 to 2. Under the same conditions as coating conditions (injection of nitrogen gas into an adhesive composition and introduction of a surfactant thereto), a discharge liquid was poured into a paper cup, followed by photographing with a digital camera for observation of bubble increase and bubble size over time using a stopwatch.

### 2) 180° peel strength

An ABS plate, a chrome plate, a painted plate (standard painted plate for peel strength measurement) and a polycarbonate (PC) plate, which have a width of 50 mm and a length of 120 mm, were cleaned with an isopropyl alcohol solution, followed by drying. A PET film having a thickness of 0.038 mm and a width of 30 mm was laminated on one surface of each of the acrylic foam tapes so as to form a cover, thereby preparing a specimen. The specimen was bonded to each of the ABS, chrome, painted, and PC plates, followed by rolling 5 times in each direction using a 2 kg roller, thereby preparing a sample for peel strength.

The prepared samples were left at room temperature for 30 minutes and for 24 hours. Next, 180° peel strength was measured on the sample at room temperature at a speed of 300 mm/min, and an average value of 5 samples was recorded.

### [Result of Property Evaluation]

### 1) Bubble stability

Results of bubble stability are shown in Fig. 2. Referring to Fig. 2, it can be confirmed that the foam tape of Comparative Example 1 using a typical silicone surfactant suffered from escape of lots of large-sized bubbles after 3 minutes. Conversely, it can be seen that the foam tape of Example 1 according to the invention exhibited excellent bubble stability since the foam tape of Example 1 less suffered from escape of bubbles than Comparative Example 1. In addition, referring to Fig. 2 again, it can be seen that the foam tape of Comparative Example 2 using the fluorine surfactant also exhibited similar bubble stability to that of Example 1. That is, it can be seen that the foam tape of Example 1 according to the invention exhibited equivalent bubble stability to the foam tape using the fluorine surfactant even though the foam tape according to the present invention did not use a high-price surfactant such as the fluorine surfactant.

### 2) Peel strength

**[Table 1]**

| | Standing time | Peel strength (g/inch) | | | |
|---|---|---|---|---|---|
| | | Painted surface | Chrome surface | ABS | PC |
| Example 1 | 30 minutes | 2796 | 2594 | 3435 | 1426 |
| | 24 hours | 3077 | Backing separation | 3475 | 1658 |
| Example 2 | 30 minutes | 2708 | 2512 | 3399 | 1387 |
| | 24 hours | 3010 | Backing separation | 3124 | 1597 |
| Example 3 | 30 minutes | 2751 | 2543 | 3412 | 1392 |
| | 24 hours | 3021 | Backing separation | 3234 | 1617 |
| Example 4 | 30 minutes | 2774 | 2560 | 3425 | 1402 |
| | 24 hours | 3039 | Backing separation | 3411 | 1633 |
| Comparative Example 1 | 30 minutes | 2630 | 2298 | 1931 | 653 |
| | 24 hours | 3054 | Backing separation | 2450 | 1033 |
| Comparative Example 2 | 30 minutes | 2484 | 2074 | 2197 | 1502 |
| | 24 hours | 2986 | Backing separation | 2625 | 1852 |

Referring to Table 1 showing evaluation results of peel strength, the foam tape of Comparative Example 1 using the existing silicone surfactant alone exhibited low peel strength on most substrates, and exhibited extremely low peel strength particularly on the PC surface. (However, referring to evaluation results of peel strength on the chrome surface after the foam tape was left for 24 hours, the PET backing film was separated while the foam tape was broken due to high adhesion thereof in all cases of Examples and Comparative Examples.)

As such, the foam tapes of Comparative Examples exhibited lower peel strength than those of Examples. It is understood that, since other mixing components (non-siloxane polymer) contained in the surfactant used in the foam tape of Comparative Examples affected a surface of the foam tape, the foam tape was deteriorated in peel strength. Conversely, since the surfactant used in the foam tape of Example 1 had a low amount of other mixing components (non-siloxane polymer), the foam tape according to the invention exhibited high peel strength on most adherends.

## Claims

1. A foam tape base material composition comprising: an acrylic monomer, a radical initiator, a cross-linking agent, a porous filler, and a surfactant, wherein the surfactant comprises 60 wt% to 90 wt% of a siloxane polymer and 10 wt% to 40 wt% of a non-siloxane polymer.

2. The base material composition according to claim 1, wherein the siloxane polymer is a polyalkyleneoxide-modified polydimethylsiloxane.

3. The base material composition according to claim 1, wherein the non-siloxane polymer is a polyalkyleneoxide.

4. The base material composition according to claim 1, further comprising: an additive selected from the group consisting of tackifiers, coupling agents, antistatic agents, dyes, pigments, UV blocking agents, antioxidants, processing oil, and mixtures thereof.

5. The base material composition according to claim 1, wherein the acrylic monomer comprises at least one selected from the group consisting of butyl acrylate, butyl methacrylate, hexyl acrylate, hexyl methacrylate, n-octyl acrylate, n-octyl methacrylate, isooctyl acrylate, isooctyl methacrylate, 2-ethylhexyl acrylate, 2-ethylhexyl methacrylate, isononyl acrylate, isononyl methacrylate, acrylic acid, methacrylic acid, maleic acid, fumaric acid, acrylamide, N-vinyl pyrrolidone, N-vinyl caprolactam, and acrylonitrile.

6. The base material composition according to claim 1, wherein the base material composition comprises 0.1 parts by weight to 5 parts by weight of the radical initiator, 0.01 parts by weight to 5 parts by weight of the cross-linking agent, 1 parts by weight to 10 parts by weight of the porous filler, and 0.1 parts by weight to 5 parts by weight of the surfactant, based on 100 parts by weight of the acrylic monomer.

7. A foam tape comprising the foam tape base material composition according to any one of claims 1 to 6.

8. A method for preparing a foam tape comprising:
(a) mixing an acrylic monomer, a radical initiator, a cross-linking agent, a porous filler, and a surfactant including 60 wt% to 90 wt% of a siloxane polymer and 10 wt% to 40 wt% of a non-siloxane polymer to prepare a base material composition;
(b) coating the base material composition onto a backing film; and
(c) forming a foam tape by performing polymerization simultaneously with foam formation by curing the backing film coated with the base material composition through a UV curing apparatus.

## Patentansprüche

1. Schaumstoffklebeband-Basismaterialzusammensetzung, umfassend: ein Acrylmonomer, einen Radikalinitiator, ein Vernetzungsmittel, einen porösen Füllstoff und ein Tensid, wobei das Tensid 60 Gew.-% bis 90 Gew-% eines Siloxanpolymers und 10 Gew.-% bis 40 Gew.-% eines Nicht-Siloxan-Polymers umfasst.

2. Basismaterialzusammensetzung nach Anspruch 1, wobei das Siloxanpolymer ein polyalkylenoxidmodifiziertes Polydimethylsiloxan ist.

3. Basismaterialzusammensetzung nach Anspruch 1, wobei das Nicht-Siloxan-Polymer ein Polyalkylenoxid ist.

4. Basismaterialzusammensetzung nach Anspruch 1, ferner umfassend: ein Additiv ausgewählt aus der Gruppe bestehend aus Klebrigmachern, Kopplungsmitteln, Antistatika, Farbstoffen, Pigmenten, UV-blockierenden Mitteln, Antioxidantien, Verarbeitungsöl und Gemischen daraus.

5. Basismaterialzusammensetzung nach Anspruch 1, wobei das Acrylmonomer zumindest eines aus der Gruppe bestehend aus Butylacrylat, Butylmethacrylat, Hexylacrylat, Hexylmethacrylat, n-Octylacrylat, n-Octylmethacrylat, Isooctylacrylat, Isooctylmethacrylat, 2-Ethylhexylacrylat, 2-Ethylhexylmethacrylat, Isononylacrylat, Isononylmethacrylat, Acrylsäure, Methacrylsäure, Maleinsäure, Fumarsäure, Acrylamid, N-Vinylpyrrolidon, N-Vinylcaprolactam und Acrylnitril umfasst.

6. Basismaterialzusammensetzung nach Anspruch 1, wobei die Basismaterialzusammensetzung 0,1 Gewichtsteile bis 5 Gewichtsteile des Radikalinitiators, 0,01 Gewichtsteile bis 5 Gewichtsteile des Vernetzungsmittels, 1 Gewichtsteil bis 10 Gewichtsteile des porösen Füllstoffs und 0,1 Gewichtsteile bis 5 Gewichtsteile des Tensids, bezogen auf 100 Gewichtsteile des Acrylmonomers, umfasst.

7. Schaumstoffklebeband, umfassend die Schaumstoffklebeband-Basismaterialzusammensetzung nach einem der Ansprüche 1 bis 6.

8. Verfahren zur Herstellung eines Schaumstoffklebebands, umfassend:
(a) Mischen eines Acrylmonomers, eines Radikalinitiator, eines Vernetzungsmittels, eines porösen Füllstoffs und eines Tensids, das 60 Gew.-% bis 90 Gew-% eines Siloxanpolymers und 10 Gew.-% bis 40 Gew.-% eines Nicht-Siloxan-Polymers enthält, um eine Basismaterialzusammensetzung herzustellen;
(b) Aufbringen der Basismaterialzusammensetzung auf eine Trägerfolie; und
(c) Ausbilden eines Schaumstoffklebebands durch Durchführen einer Polymerisierung gleichzeitig mit einer Schaumbildung durch Härten der Trägerfolie mit der aufgebrachten Basismaterialzusammensetzung durch eine UV-Härtungsvorrichtung.

## Revendications

1. Composition de matériau de base pour bande de mousse comprenant : un monomère acrylique, un initiateur de radicaux, un agent de réticulation, une charge poreuse et un agent tensioactif, dans laquelle l'agent tensioactif comprend de 60 % en poids à 90 % en poids d'un polymère de siloxane et de 10 % en poids à 40 % en poids d'un polymère non-siloxane.

2. Composition de matériau de base selon la revendication 1, dans laquelle le polymère de siloxane est un polydiméthylsiloxane modifié par poly(oxyde d'alkylène).

3. Composition de matériau de base selon la revendication 1, dans laquelle le polymère non-siloxane est un poly(oxyde d'alkylène).

4. Composition de matériau de base selon la revendication 1, comprenant en outre : un additif sélectionné dans le groupe composé d'agents poisseux, d'agents de couplage, d'agents antistatiques, de teintures, de pigments, d'agents de blocage des UV, d'antioxydants, d'huile de traitement et de leurs mélanges.

5. Composition de matériau de base selon la revendication 1, dans laquelle le monomère acrylique comprend au moins un élément choisi dans le groupe constitué de l'acrylate de butyle, du méthacrylate de butyle, de l'acrylate d'hexyle, du méthacrylate d'hexyle, de l'acrylate de n-octyle, du méthacrylate de n-octyle, de l'acrylate d'iso-octyle, du méthacrylate d'iso-octyle, de l'acrylate de 2-éthylhexyle, du méthacrylate de 2-éthylhexyle, de l'acrylate d'isononyle, du méthacrylate d'isononyle, de l'acide acrylique, de l'acide méthacrylique, de l'acide maléique, de l'acide fumarique, de l'acrylamide, de la pyrrolidone de N-vinyle, du caprolactame de N-vinyle et de l'acrylonitrile.

6. Composition de matériau de base selon la revendication 1, dans laquelle la composition de matériau de base comprend entre 0,1 partie en poids et 5 parties en poids de l'initiateur de radicaux, de 0,01 partie en poids à 5 parties en poids de l'agent de réticulation, de 1 partie en poids à 10 parties en poids de la charge poreuse et de 0,1 partie en poids à 5 parties en poids de l'agent tensioactif, sur la base de 100 parties en poids du monomère acrylique.

7. Bande de mousse comprenant la composition de matériau de base pour bande de mousse selon l'une quelconque des revendications 1 à 6.

8. Procédé de préparation d'une bande de mousse comprenant :
(a) le mélange d'un monomère acrylique, d'un initiateur de radicaux, d'un agent de réticulation, d'une charge poreuse et d'un agent tensioactif comprenant de 60 % en poids à 90 % en poids d'un polymère de siloxane et de 10 % en poids à 40 % en poids d'un polymère non-siloxane pour préparer une composition de matériau de base ;
(b) le revêtement de la composition de matériau de base sur une feuille support ; et
(c) la formation d'une bande de mousse en effectuant la polymérisation simultanément à la formation de mousse en durcissant la feuille support revêtue de la composition de matériau de base à travers un appareil de durcissement aux UV.
